# EUROPÄISCHE PATENTSCHRIFT

(11) **EP 2 170 499 B1**
(45) Veröffentlichungstag und Bekanntmachung des Hinweises auf die Patenterteilung: **16.11.2016**
(21) Anmeldenummer: 08750221.7
(22) Anmeldetag: 09.05.2008
(51) Int. Cl.: B01J 12/00, C01C 3/02

(54) **REAKTOR ZUR HERSTELLUNG VON CYANWASSERSTOFF NACH DEM ANDRUSSOW-VERFAHREN**
REACTOR FOR PREPARING HYDROGEN CYANIDE BY THE ANDRUSSOW PROCESS
RÉACTEUR DE PRODUCTION D'ACIDE CYANHYDRIQUE PAR LE PROCÉDÉ ANDRUSSOW

(30) Priorität: 23.07.2007 DE 102007034715
(43) Veröffentlichungstag der Anmeldung: 07.04.2010
(73) Patentinhaber: Evonik Röhm GmbH, 64293 Darmstadt (DE)
(72) Erfinder: SCHÄFER, Thomas, 64572 Büttelborn (DE); WEBER, Robert, 64665 Alsbach-Hähnlein (DE); GROPP, Udo, 83093 Bad Endorf (DE); MERTZ, Thomas, 64625 Bensheim (DE)
(86) Internationale Anmeldenummer: PCT/EP2008/055730
(87) Internationale Veröffentlichungsnummer: WO 2009/013035

(56) Entgegenhaltungen:
- EP-A- 0 959 042
- WO-A-99/01212
- US-A- 3 505 030

## Beschreibung

Die vorliegende Erfindung betrifft einen Reaktor zur Herstellung von Cyanwasserstoff (HCN) nach dem Andrussow-Verfahren sowie ein Verfahren zur Herstellung von HCN, das unter Verwendung des erfindungsgemäßen Reaktors durchgeführt wird.

Die Synthese von Cyanwasserstoff (HCN) nach dem Andrussow-Verfahren wird in Ullmann's Encyclopedia of Industrial Chemistry, Volume 8, VCH Verlagsgesellschaft, Weinheim 1987, Seite 161-162 beschrieben. Das Eduktgasgemisch, das im Allgemeinen Methan oder einen methanhaltigen Erdgasstrom, Ammoniak und Sauerstoff umfasst, wird in einem Reaktor über Katalysatornetze geleitet und bei Temperaturen von ca. 1000 °C umgesetzt. Der notwendige Sauerstoff wird üblicherweise in Form von Luft eingesetzt. Die Katalysatornetze bestehen im Allgemeinen aus Platin oder Platinlegierungen. Die Zusammensetzung des Eduktgasgemisches entspricht etwa der Stöchiometrie der exotherm verlaufenden Bruttoreaktionsgleichung

CH₄ + NH₃ + 3/2 O₂ → HCN + 3 H₂O dHr=-473,9 kJ.

Das abströmende Reaktionsgas enthält das Produkt HCN, nicht umgesetztes NH₃ und CH₄ sowie die wesentlichen Nebenprodukte CO, H₂, H₂O, CO₂ und einen großen Anteil N₂.

Das Reaktionsgas wird in einem Abhitzekessel schnell auf ca. 150 - 200 °C abgekühlt und passiert anschließend eine Waschkolonne, in der mit verdünnter Schwefelsäure das nicht umgesetzte NH₃ herausgewaschen wird und Teile des Wasserdampfes kondensiert werden. Bekannt ist auch die Absorption von NH₃ mit Natriumhydrogenphosphat-Lösung und anschließendes Recycling des Ammoniaks. In einer nachfolgenden Absorptionskolonne wird HCN in kaltem Wasser absorbiert und in einer nachgeschalteten Rektifikation mit einer Reinheit größer 99,5 Ma% dargestellt. Das im Sumpf der Kolonne anfallende, HCN-haltige Wasser wird abgekühlt und zur HCN-Absorptionskolonne zurückgeführt.

Ein breites Spektrum möglicher Ausführungen des Andrussow-Verfahrens ist in DE 549 055 beschrieben. Dementsprechend sind auch Reaktoren zur Herstellung von HCN nach dem Andrussow-Verfahren bekannt, wobei ein Beispiel für einen derartigen Reaktor in EP 1 001 843 B1 dargelegt ist. Diese Reaktoren umfassen im Allgemeinen eine Zuleitung für die Edukte, eine Ableitung für die Produkte sowie einen Katalysator, der beispielsweise in Form von mehreren hintereinander angeordneten Netzen aus Platin ausgeführt sein kann. Unmittelbar oberhalb des Katalysatornetzes kann eine gasdurchlässige Schutzschicht vorgesehen sein, die die als Hitzschild und als Flammrückschlagschutz dient.

Die mit bekannten Reaktoren ausgeführten Verfahren liefern bereits gute Ausbeuten bei einem akzeptablen Energiebedarf. Aufgrund der Bedeutung des Produkts besteht allerdings ein permanentes Bestreben, die Leistungsfähigkeit und die Effektivität der Reaktoren zu verbessern.

In Anbetracht des Standes der Technik ist es nun Aufgabe der vorliegenden Erfindung einen Reaktor zur Verfügung zu stellen, der eine besonders einfache und kostengünstige Herstellung von HCN ermöglicht. Hierbei sollten insbesondere die Ausbeute, die Produktionsleistung (Kg HCN / h) und die Katalysatorstandzeit erhöht werden. Darüber hinaus war es mithin Aufgabe der vorliegenden Erfindung einen Reaktor zur Verfügung zu stellen, der eine Produktion von HCN mit hoher HCN-Konzentration im Reaktionsgas und somit besonders geringen Energiebedarf bei der HCN-Isolierung ermöglicht.

Gelöst werden diese sowie weitere nicht explizit genannte Aufgaben, die jedoch aus den hierin einleitend diskutierten Zusammenhängen ohne weiteres ableitbar oder erschließbar sind, durch einen Reaktor mit allen Merkmalen des Patentanspruchs 1. Zweckmäßige Abwandlungen des erfindungsgemäßen Reaktors werden in Unteransprüchen unter Schutz gestellt. Hinsichtlich des Verfahrens zur Herstellung von HCN bietet der Anspruch 25 eine Lösung der zugrunde liegenden Aufgabe.

Gegenstand der vorliegenden Erfindung ist dementsprechend ein Reaktor zur Herstellung von Cyanwasserstoff nach dem Andrussow-Verfahren, umfassend einen Reaktorkessel, mindestens eine Gaszuleitung, die in einen Gaszuleitungsbereich mündet, eine Ableitung der Reaktionsprodukte und einen Katalysator, wobei innerhalb des Reaktorkessels zwischen dem Gaszuleitungsbereich und dem Katalysator mindestens ein Mischelement sowie mindestens eine gasdurchlässige Zwischenschicht vorgesehen sind und das Mischelement zwischen dem Gaszuleitungsbereich und der gasdurchlässigen Zwischenschicht angeordnet ist.

Durch diese Maßnahmen gelingt es überraschend einen Reaktor bereitzustellen, der eine besonders einfache und kostengünstige Herstellung von HCN ermöglicht. Darüber hinaus kann die Ausbeute und die Produktionsleistung (Kg HCN / h) durch den Einsatz eines erfindungsgemäßen Reaktors erhöht werden. Des Weiteren kann HCN mit einem erfindungsgemäßen Reaktor bei einem besonders geringen Energiebedarf produziert werden. Ferner kann die Standzeit der Katalysatoren durch die konstruktiven Merkmale des Reaktors verlängert werden.

Der erfindungsgemäße Reaktor umfasst einen Reaktorkessel, in den mindestens eine Gaszuleitung einmündet. Der Reaktorkessel umschließt mindestens ein Mischelement, mindestens eine gasdurchlässige Zwischenschicht und mindestens einen Katalysator. Die Produkte werden aus dem Reaktorkessel durch mindestens eine Ableitung abgeleitet. Die Form des Reaktorkessels ist an sich unkritisch, so dass dieser einen rechteckigen oder runden Querschnitt aufweisen kann. Vorzugsweise weist der Reaktorkessel eine zylindrische Form auf. Das Volumen des Reaktorkessels ist von der vorgesehenen Produktionsleistung abhängig, wobei der Reaktorkessel jedes der üblichen Volumina einnehmen kann. Zweckmäßig kann das Volumen des Reaktorkessels beispielsweise im Bereich von 0,01 m³ bis 50 m³ liegen. Vorzugsweise kann das Verhältnis von Höhe und Durchmesser (H/D) des Reaktorkessels im Bereich von 0,4 bis 1,8, besonders bevorzugt 0,6 bis 1,4 liegen. Zweckmäßig kann der Reaktorkessel, in Strömungsrichtung des Gases gesehen, ab der gasdurchlässigen Zwischenschicht eine Innenauskleidung aus einem hitzebeständigen Material aufweisen. Beispielsweise kann eine Schicht aus einem Keramikfasermaterial, wie zum Beispiel ein Si-haltiges Keramikfasermaterial, das unter der Handelsbezeichnung Nefalit® erhältlich ist, vorgesehen sein, die den Reaktorkessel vor einer Hitzeeinwirkung schützt.

Die verschiedenen Eduktgase können vor oder im Reaktorkessel zusammengeführt werden. Dementsprechend können in den Reaktorkessel eine, zwei oder mehr Gaszuleitungen einmünden. Die Gase werden innerhalb des Reaktorkessels zunächst in einen Gaszuleitungsbereich geführt, dessen Volumen an sich unkritisch ist.

Zwischen Gaszuleitungsbereich und dem Katalysator ist gemäß der vorliegenden Erfindung mindestens ein Mischelement vorgesehen. Je nach Ausführungsform kann der Gaszuleitungsbereich auch ein Teil des Mischelements bilden. Das Mischelement dient zur Durchmischung der zugeführten Eduktgase, wobei sämtliche bekannten Ausführungsformen von Gasmischern eingesetzt werden können.

Aufgrund einer einfachen und wartungsarmen Konstruktion kann das Mischelement vorzugsweise in Form von plattenförmigen Einbauten ausgeführt sein, die besonders bevorzugt mehrere Plattenschichten umfassen. Gemäß einem bevorzugten Aspekt der Erfindung kann das Mischelement drei, vier, fünf oder mehr Plattenschichten aufweisen. Vorzugsweise sind diese Plattenschichten im Wesentlichen parallel angeordnet, wobei der Winkel der einzelnen Plattenschichten zu einander vorzugsweise im Bereich von -10° bis +10°, besonders bevorzugt-5° bis +5° liegt. Der Plattenabstand kann beispielsweise 0,5 cm bis 200 cm, vorzugsweise 1 cm bis 100 cm und ganz besonders bevorzugt 5 cm bis 50 cm betragen. Hierbei können beispielsweise Lochplatten eingesetzt werden, wobei die Öffnungen so versetzt sind, dass eine Durchmischung der Gase erzielt wird. Besonders bevorzugt werden dichte Platten eingesetzt. Bei dieser Ausführungsform kann der Gasstrom durch Öffnungen geleitet werden, die senkrecht zur Plattenebene in den bzw. zwischen den Platten vorgesehen sind. Die jeweiligen Öffnungen der verschiedenen Schichten können, bezogen auf die jeweilige Schicht, abwechselnd in der Mitte des Reaktorkessels, beispielsweise in Form einer Öffnung innerhalb der Platte, oder am Rande des Reaktorkessels, d.h. zwischen der jeweiligen Platte und der Wand des Reaktorkessels, vorgesehen sein. Diese Konstruktion kann vorzugsweise als Ring-Scheiben-Anordnung (Disk-Donut-Design) ausgeführt sein, wobei die Scheiben nicht unmittelbar mit dem Reaktorkessel verbunden sind, wohingegen die Ringe mit dem Reaktorkessel abschließen können. Bevorzugt können diese Anordnungen 2 bis 6 Scheiben umfassen.

Bei Ausführungsformen, die unter Verwendung von dichten Platten eine Durchmischung des Gasstroms erzielen, ist die Anzahl der Öffnungen in der jeweiligen Schicht im Vergleich zu den Ausführungsformen mit Lochplatten relativ gering. Bevorzugt weisen Schichten, die in der Ausführungsform mit dichten Platten ausgebildet werden, höchstens 10, bevorzugt höchstens 5 pro m² Öffnungen auf.

Ausführungsformen, die unter Verwendung von Lochplatten arbeiten, weisen mehr Öffnungen pro m² auf. So können die Lochplatten beispielsweise mindestens 11, bevorzugt mindestens 15 und ganz besonders bevorzugt mindestens 20 Öffnungen pro m² umfassen.

Vorzugsweise umfasst das Mischelement dichte Platten, die eine Fläche aufweisen, die mindestens 40%, besonders bevorzugt mindestens 60% und ganz besonders bevorzugt mindestens 80% der Reaktorquerschnittsfläche entspricht, wobei besonders bevorzugt mindestens 25%, bevorzugt bei mindestens 50% und besonders bevorzugt bei mindestens 75% der im Mischelement enthaltenen Plattenschichten eine derartige Fläche aufweisen. Die Reaktorquerschnittsfläche ergibt sich aus der Fläche des Reaktorkessels, die jeweils parallel zu der jeweiligen Plattenschicht gemessen wird.

Durch die zuvor dargelegten Konstruktionen kann sich vorzugsweise eine turbulente Strömung ausbilden, so dass eine hervorragende Durchmischung der Gase erzielt wird.

Der Reaktorkessel und das Mischelement können aus sämtlichen Materialien hergestellt werden, die den herrschenden Bedingungen widerstehen. Geeignete Materialien sind insbesondere Metalle, wie beispielsweise Stahl. Darüber hinaus können diese Komponenten des Reaktors mit Materialien beschichtet werden, die einen Abbau der Eduktgase, insbesondere von NH₃ bei den gewählten Bedingungen vermindern. Diese Materialien sind unter anderem in US 5,431,984 dargelegt. Erfindungsgemäß weist ein Reaktor, in Richtung des Gasstroms gesehen, nach dem Mischelement eine gasdurchlässige Zwischenschicht auf. Die gasdurchlässige Zwischenschicht ist vorzugsweise insbesondere so ausgestaltet, dass diese einen Flammenrückschlagschutz bietet. Des Weiteren kann durch diese Schicht eine Filterung der Eduktgase erreicht werden, wobei insbesondere kleine Partikel entfernt werden. Darüber hinaus kann sich durch die gasdurchlässige Zwischenschicht eine Druckdifferenz ausbilden, die zu einem besonders gleichmäßigen Anströmen des Katalysators durch die Eduktgase führt. Der Druckabfall kann hierbei in einem weiten Bereich liegen, wobei die erfindungsgemäßen Vorteile bei einem höheren Druckabfall, d.h. bei einer Ausbildung eines hohen Strömungswiderstands durch die gasdurchlässige Zwischenschicht in einem besonders hohen Maß erzielt werden. Andererseits wird bei einem hohen Strömungswiderstand relativ viel Energie zur Ausbildung der vorgesehenen Strömungsgeschwindigkeit der Eduktgase benötigt. Der Fachmann wird daher den Wert der Druckdifferenz bzw. des durch die gasdurchlässige Zwischenschicht verursachten Strömungswiderstandes bei den vorgegebenen Randbedingungen optimal einstellen. Hierbei führt eine geringe Gasdurchlässigkeit der Zwischenschicht zu einer hohen Druckdifferenz. Die gasdurchlässige Zwischenschicht kann vorzugsweise einen Druckabfall erzeugen, der im Bereich von 1 bis 100 mbar, besonders bevorzugt 5 bis 30 mbar liegt, gemessen mit einem U-Rohrmanometer bei einer Strömungsgeschwindigkeit des Eduktgasgemisches von 1,5 m/s.

Gemäß einem bevorzugten Aspekt kann der Abstand zwischen der gasdurchlässigen Zwischenschicht und einem flächig im Reaktor ausgebildeten Katalysator mindestens 30 mm, vorzugsweise mindestens 60 mm betragen. Besonders bevorzugt kann dieser Abstand im Bereich von 40 mm bis 1000 mm, ganz besonders bevorzugt im Bereich von 60 mm bis 100 mm liegen. Bevorzugt ist die gasdurchlässige Zwischenschicht im Wesentlichen parallel zur Fläche des flächig im Reaktor ausgebildeten Katalysators vorgesehen. Hierbei bilden die gasdurchlässige Zwischenschicht und der flächig im Reaktor ausgebildete Katalysator vorzugsweise einen Winkel im Bereich von -10° bis +10°, besonders bevorzugt -5° bis +5°.

Die gasdurchlässige Zwischenschicht kann beispielsweise in Form eines Vlieses, Gewebes oder Schaums ausgebildet sein, wobei diese Schicht ein oder mehrere Lagen umfassen kann. Die Zwischenschicht kann aus jedem Material aufgebaut sein, das den herrschenden Bedingungen widersteht. Hierzu gehören insbesondere Metalle, beispielsweise Stahl, sowie anorganische Materialien, wie Keramiken oder mineralische Gläser. Gemäß einer bevorzugten Ausführungsform umfasst die gasdurchlässige Zwischenschicht mindestens ein in Richtung des Katalysators angeordnetes Metallnetz und mindestens eine Lage aus Glaswolle, beispielsweise Quarzwolle, die in Richtung des Gaszuleitungsbereichs vorgesehen ist. Das in der Zwischenschicht angeordnete Metallnetz kann vorzugsweise eine nominale Maschenweite im Bereich von 1 µm bis 200 µm, besonders bevorzugt im Bereich von 5 µm bis 100 µm aufweisen. Die nominale Maschenweite kann beispielsweise mit dem bekannten Gasblasentest (Bubble Point Test) gemäß ISO-Norm 4003 bestimmt werden. Das Metallnetz kann beispielsweise als Gewebe oder Geflecht ausgestaltet sein, die aus Metalldraht gebildet werden. Hierzu gehören beispielsweise Tressen- oder Köpertressengewebe. Die Dicke der Lage aus Glaswolle kann vorzugsweise im Bereich von 0,5 cm bis 10 cm, besonders bevorzugt im Bereich 1 cm bis 5 cm liegen. Hierbei können die Metallnetze und die Lagen aus Glaswolle von zwei Lochblechen eingeschlossen sein, die beispielsweise einen Lochdurchmesser im Bereich von 1 mm bis 100 mm, besonders bevorzugt 5 mm bis 40 mm aufweisen.

Nachdem die Eduktgase die gasdurchlässige Zwischenschicht passiert haben, strömen diese auf einen Katalysator. Die zur Herstellung von HCN nach dem Andrussow-Verfahren einsetzbaren Katalysatoren sind allgemein bekannt und beispielsweise in Ullmann's Encyclopedia of Industrial Chemistry, Volume 8, VCH Verlagsgesellschaft, Weinheim 1987 dargelegt.

Im Allgemeinen umfassen die Katalysatoren mindestens ein Edelmetall, insbesondere ein Metall der Platingruppe. Zu der Platingruppe gehören insbesondere Platin, Palladium, Iridium, Osmium und Rhodium, wobei die Verwendung von Platin besonders bevorzugt ist. Diese Metalle können einzeln oder als Mischung eingesetzt werden. So können insbesondere Legierungen verwendet werden, die Platin und Rhodium enthalten.

Vorzugsweise kann der Katalysator flächig im Reaktor ausgebildet sein, wobei die Fläche besonders bevorzugt so angeordnet ist, dass diese Fläche im Wesentlichen senkrecht vom Gas durchströmt wird. Dieser Strömungswinkel liegt vorzugsweise im Bereich von 70° bis 110° und besonders bevorzugt im Bereich von 80° bis 100°. Der flächig ausgebildete Katalysator kann vorzugsweise im Wesentlichen parallel zu den plattenförmigen Einbauten angeordnet sein, die zur Durchmischung der Gase dienen. Der von diesen Ebenen gebildete Winkel kann beispielsweise im Bereich von -10° bis +10° liegen. Diese Werte beziehen sich auf die Plattenschicht, die die geringste Entfernung zur Katalysatorschicht aufweist.

Der flächig im Reaktor ausgebildete Katalysator kann beispielsweise in Form von Netzen, beispielsweise Drahtgeflechten, Drahtgeweben oder Gittern, perforierten Metallfolien oder Metallschäumen vorgesehen sein. Vorzugsweise werden insbesondere Netze eingesetzt, die Platin enthalten. Hierbei können ein, zwei, drei, vier oder mehr Netze eingesetzt werden. Bevorzugte Ausführungsformen bekannter Katalysatoranordnungen sind unter anderem in EP-A-0 680 767, EP-A-1 358 010, WO 02/062466 und WO 01/80988 beschrieben.

Der Katalysator wird im Allgemeinen auf einer Auflage angeordnet. Diese Auflage kann beispielsweise aus Metall oder aus einem keramischen Material gefertigt werden, wobei keramische Materialien bevorzugt sind. Diese Auflagen sind anderem in EP-A-0 680 787, EP-A-1 358 010, EP-A-1 307 401, WO 02/062466 und WO 01/80988 dargelegt.

Beispielsweise kann der Katalysator auf eine Auflage aufgelegt werden, die aus Keramik hergestellt ist. Vorzugsweise kann die keramische Auflage einen mehrschichtigen Aufbau aufweisen, wobei die Auflage eine obere Keramikauflage, die in Richtung des Katalysators vorgesehen ist, und eine untere Keramikauflage umfasst. Die obere Keramikauflage kann beispielsweise Strömungskanäle mit geringerem Durchmesser aufweisen als die untere Keramikauflage, die in Richtung der Ableitung der Reaktionsprodukte vorgesehen ist. Der Durchmesser der Strömungskanäle der oberen Keramikauflage kann beispielsweise im Bereich von 2 mm bis 20 mm, bevorzugt 4 mm bis 12 mm liegen, wohingegen der Durchmesser der Strömungskanäle der unteren Keramikauflage im Bereich von 10 mm bis 30 mm, bevorzugt 12 mm bis 24 mm liegen kann. Der Durchmesser der Strömungskanäle stellt einen Mittelwert dar, der durch ausmessen (Schiebelehre) einer statistisch ausreichend großen Zahl von Kanälen und anschließender Berechnung des Mittelwertes bestimmt werden kann. Die Auflage aus Keramik kann insbesondere aus Al₂O₃ -Keramiken oder Al-Silikatkeramiken mit einem Al₂O₃ -Anteil größer 85% hergestellt werden. Gemäß einer besonders zweckmäßigen Ausführungsform des Reaktors kann zwischen dem Katalysator und der Auflage aus Keramik ein Metallnetz vorgesehen sein, wobei dieses Metallnetz aus einem Material hergestellt wird, das herrschenden Temperaturbedingungen widersteht. Dieses Metallnetz kann besonders bevorzugt aus Stahl oder einer Stahllegierung, beispielsweise aus Mat. 1.4767 bzw. Kanthal, hergestellt werden.

Gemäß einer weiteren Ausführungsform des erfindungsgemäßen Reaktors kann der Katalysator auf einer Auflage aufliegen, die mindestens ein metallisches Tragnetz umfasst, das auf einem Traggitter aus Metall aufgebracht ist. Vorzugsweise kann die Auflage ein, zwei, drei, vier oder mehr metallische Tragnetze umfassen. Hierbei kann das Tragnetz beispielsweise eine Maschenweite im Bereich von 1 mm bis 50 mm aufweisen. Das Tragnetz sowie das Traggitter können bevorzugt aus Stahl oder einer Stahllegierung, beispielsweise aus Mat. 1.4767 bzw. Kanthal oder Inconel 600, Mat. 2.4816, hergestellt werden, wobei diese Materialien bei den jeweils herrschenden Temperaturbedingungen stabil sein müssen.

Das Traggitter kann auf dem Boden des Reaktorkessels befestigt werden, wobei das Traggitter so ausgestaltet werden kann, dass der flächige Katalysator einen Abstand zum mit Öffnungen versehenen Boden des Reaktorkessels aufweist, der im Bereich von 50 mm bis 300 mm liegt.

Zweckmäßigerweise kann unmittelbar auf dem Katalysator eine Schicht aus einem keramischen Material aufgebracht sein. Diese Schicht kann in Form ein oder mehrerer Keramikgeweben oder eines Keramikschaums vorliegen.

Der Reaktorkessel kann einen Boden mit ein oder mehrere Öffnungen aufweisen, durch die die Reaktionsprodukte aus dem Reaktorkessel abgeleitet werden. Hierbei kann der Boden des Reaktorkessels auch durch die Ableitung der Reaktionsprodukte gebildet werden. Gemäß einer bevorzugten Ausführung des erfindungsgemäßen Reaktors kann die Ableitung der Reaktionsprodukte Rohrbündel umfassen, die in Form von Wärmeaustauschern ausgestaltet sind. Hierbei können die Rohrbündel in der Nähe des Reaktorkessels mit keramischen Elementen (Ferrules) vor Hitzeeinwirkung geschützt sein.

Der erfindungsgemäße Reaktor kann weitere Komponenten, insbesondere eine Komponente zum Starten der katalytischen Reaktion enthalten. Hierzu gehören insbesondere Wasserstofffackeln, Zündelektroden oder die in EP-B-1 001 843 dargelegten Einrichtungen.

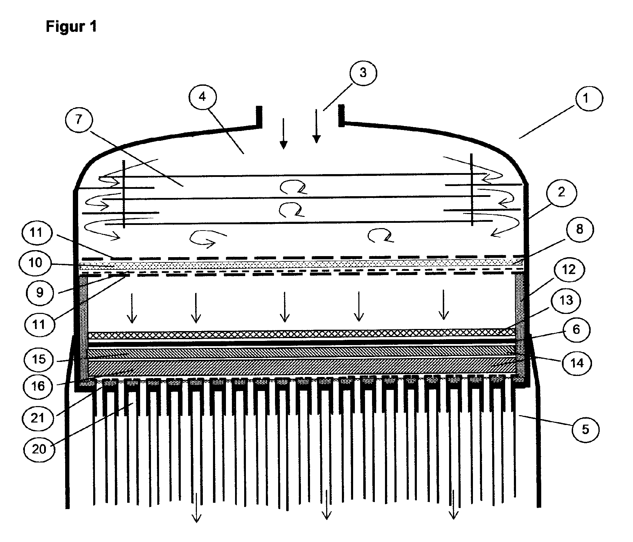

In Figur 1 ist eine bevorzugte Ausführungsform eines erfindungsgemäßen Reaktors dargelegt. Der Reaktor (1) umfasst einen Reaktorkessel (2), eine Gaszuleitung (3), die in einen Gaszuleitungsbereich (4) mündet, sowie eine Ableitung der Reaktionsprodukte (5). Zwischen dem Gaszuleitungsbereich (4) und dem Katalysator (6) sind ein Mischelement (7) sowie eine gasdurchlässige Zwischenschicht (8) vorgesehen. In dieser spezifischen Ausführungsform ist das Mischelement (7) in einem Disk-Donut-Design ausgeführt, wobei alternierend Ringe oder Scheiben vorgesehen sind. Die Ringe weisen in der Mitte des Reaktors Öffnungen auf und können mit dem Reaktorkessel in Berührung stehen. Die Scheiben sind als dichte Platten vorgesehen, wobei Öffnungen durch einen Zwischenraum zwischen Scheibe und Reaktorkessel gebildet werden.

Die gasdurchlässige Zwischenschicht (8) umfasst ein Metallnetz (9), das vorzugsweise eine Maschenweite im Bereich von 1 µm bis 200 µm, besonders bevorzugt 5 µm bis 100 µm aufweist, und eine Lage aus Glaswolle (10), die beispielsweise eine Dicke im Bereich von 0,5 cm bis 10 cm, bevorzugt 1 cm bis 5 cm aufweisen kann. Lochbleche (11) können zur Befestigung dieser Elemente eingesetzt werden, wobei die Lochbleche einen Lochdurchmesser im Bereich von 1 mm bis 100 mm, besonders bevorzugt 5 mm bis 40 mm aufweisen können.

Gemäß der vorliegenden Ausführungsform weist der Reaktorkessel (2), in Strömungsrichtung des Gases gesehen, ab der Zwischenschicht (8) eine Innenauskleidung (12) aus einem hitzebeständigen Material auf.

Nach dem das Gas die Zwischenschicht (8) passiert hat, wird das Gas mit dem Katalysator (6) in Kontakt gebracht, der in Form einer Fläche ausgebildet ist. Die in Figur 1 dargestellte Abwandlung weist eine Schicht aus einem keramischen Material (13) auf, die unmittelbar auf dem Katalysator (6) zu dessen Fixierung aufgelegt ist. In der dargestellten Ausführungsform liegt der Katalysator (6) auf einer Auflage (14) auf, die vorliegend aus Keramik gefertigt ist. Zweckmäßig kann die Keramikauflage einen zweischichtigen Aufbau aufweisen, wobei die Auflage (14) aus Keramik eine obere Keramikauflage (15) und eine untere Keramikauflage (16) umfasst.

Anschließend werden die Reaktionsprodukte durch die Ableitung (5) aus dem Reaktorkessel geleitet. Die vorliegende Ausführungsform umfasst insbesondere Rohrbündel (20), die in Form von Wärmeaustauschern ausgestaltet sind, wobei die Rohrbündel (20) in der Nähe des Reaktorkessels mit keramischen Elementen, wie beispielsweise Einsteckhülsen (21) vor Hitzeeinwirkung geschützt sind.

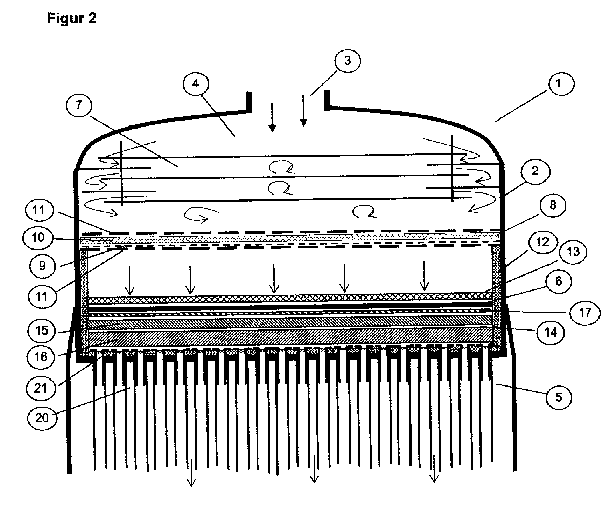

Im Folgenden wird unter Bezugnahme auf die Figur 2 eine zweite Ausführungsform des Reaktors (1) beschrieben, die der ersten Ausführungsform im Wesentlichen ähnelt, so dass nachstehend lediglich auf die Unterschiede eingegangen wird, wobei gleiche Bezugszeichen für gleiche Teile verwendet werden und die obige Beschreibung entsprechend gilt.

Wie auch die erste Ausführungsform weist auch der in Fig. 2 dargestellte Reaktor einen Reaktorkessel (2), eine Gaszuleitung (3), die in einen Gaszuleitungsbereich (4) mündet, eine Ableitung der Reaktionsprodukte (5), einen Katalysator (6), ein Mischelement (7) sowie eine gasdurchlässige Zwischenschicht (8) auf.

Im Unterschied zur obigen Ausführungsform umfasst die in Fig. 2 dargestellte Abwandlung ein Metallnetz (17), das zwischen dem Katalysator (6) und der Auflage (14) aus Keramik vorgesehen ist. Hierdurch kann die Effektivität des Reaktors überraschend gesteigert werden.

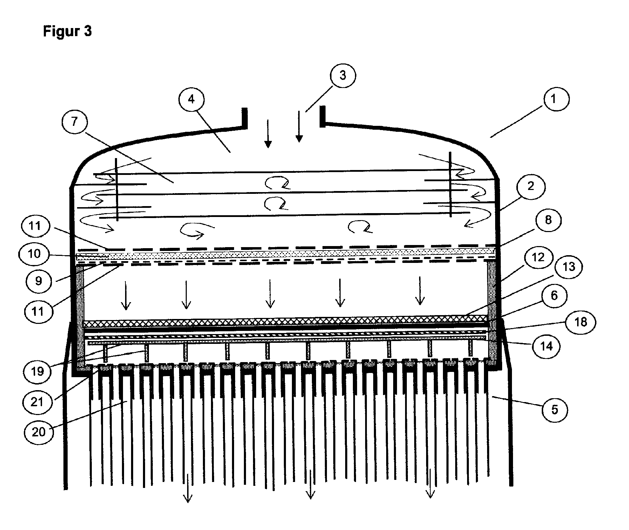

Nachfolgend wird unter Bezugnahme auf die Figur 3 eine dritte Ausführungsform des Reaktors (1) beschrieben, die der ersten Ausführungsform im Wesentlichen ähnelt, so dass nachstehend lediglich auf die Unterschiede eingegangen wird, wobei gleiche Bezugszeichen für gleiche Teile verwendet werden und die obige Beschreibung entsprechend gilt.

Wie auch die erste Ausführungsform weist auch der in Fig. 3 dargestellte Reaktor einen Reaktorkessel (2), eine Gaszuleitung (3), die in einen Gaszuleitungsbereich (4) mündet, eine Ableitung der Reaktionsprodukte (5), einen Katalysator (6), ein Mischelement (7) sowie eine gasdurchlässige Zwischenschicht (8) auf.

Im Unterschied zur Ausführungsform, die in Fig. 1 dargestellt ist, umfasst die in Fig. 3 abgebildete Abwandlung eine Auflage (14), die aus Metall hergestellt ist. Die Auflage (14) aus Metall umfasst insbesondere ein metallisches Tragnetz (18), das mit einem Traggitter (19) aus Metall unterstützt ist. Das Tragnetz (18) kann eine Maschenweite im Bereich von 1 mm bis 50 mm aufweisen.

Das Traggitter (19) steht mit den Füßen auf den keramischen Elementen (21), die die Rohrbündel (20) vor Hitzeeinwirkung schützen oder auf dem Boden der Rohrbündel (20), die als Wärmetauscher dienen. Der Abstand zwischen Katalysatornetz (6) und dem Boden der Rohrbündel (20) kann beispielsweise 50 mm bis 300 mm betragen.

Der Reaktor kann insbesondere zur Herstellung von Cyanwasserstoff (HCN) nach dem Andrussow-Verfahren eingesetzt werden. Diese Verfahren sind an sich bekannt und im zuvor dargelegten Stand der Technik näher erläutert.

Zur Herstellung von HCN wird vorzugsweise ein methanhaltiges Gas eingesetzt. Üblich kann jedes Gas mit einem ausreichend hohen Anteil an Methan eingesetzt werden. Vorzugsweise beträgt der Anteil an Methan mindestens 80 Vol.-%, besonders bevorzugt mindestens 88 Vol.-%. Neben Methan kann im Eduktgas auch Erdgas eingesetzt werden. Unter Erdgas wird hier ein Gas verstanden, welches mindestens 82 Vol-% Methan enthält.

Des Weiteren wird zur Herstellung von HCN gemäß dem Andrussow-Verfahren ein sauerstoffhaltiges Gas eingesetzt, wobei Sauerstoff oder ein Stickstoff-Sauerstoffgemisch verwendet werden kann. Hierbei liegt der Volumenanteil von Sauerstoff in Bezug auf das Gesamtvolumen an Stickstoff und Sauerstoff (O₂ /(O₂ + N₂)) im Bereich von 0,2 bis 1,0 (Vol./Vol.). Beispielsweise kann Luft als sauerstoffhaltiges Gas eingesetzt.

Gemäß einem bevorzugten Aspekt der vorliegenden Erfindung liegt der Volumenanteil von Sauerstoff in Bezug auf das Gesamtvolumen an Stickstoff und Sauerstoff (O₂ /(O₂ + N₂)) im Bereich von 0,25 bis 1,0 (Vol./Vol.). Dieser Anteil kann gemäß einem besonderen Aspekt vorzugsweise im Bereich von größer als 0,4 bis 1,0 liegen. Gemäß einem weiteren Gesichtspunkt der vorliegenden Erfindung kann der Volumenanteil von Sauerstoff in Bezug auf das Gesamtvolumen an Stickstoff und Sauerstoff (O₂ /(O₂ + N₂)) im Bereich von 0,25 bis 0,4 liegen.

Vorzugsweise kann das molare Verhältnis von Methan zu Ammoniak (CH₄/NH₃) im Eduktgasgemisch Bereich von 0,95 bis 1,05 Mol/Mol, besonders bevorzugt im Bereich von 0,98 bis 1,02 liegen.

Vorzugsweise liegt die Reaktionstemperatur zwischen 950°C und 1200°C, bevorzugt zwischen 1000 °C und 1150 °C. Die Reaktionstemperatur kann über den Anteil der verschiedenen Gase am Eduktgasstrom, beispielsweise über das Verhältnis von O₂/NH₃ eingestellt werden. Hierbei wird die Zusammensetzung des Eduktgasgemisches so eingestellt, dass das Eduktgas außerhalb des Konzentrationsbereiches zündfähiger Gemische liegt. Die Temperatur des Katalysatornetzes wird mittels eines Thermoelements oder mittels eines Strahlungspyrometers gemessen. Als Messpunkt des Strahlungspyrometers dient eine freie Stelle des glühenden Katalysators. Für die Messung mit einem Thermoelement kann sich die Messstelle, in Strömungsrichtung der Gase gesehen, hinter dem Katalysatornetz im Abstand von ca. 0 - 10 cm befinden.

Vorzugsweise liegt das molare Verhältnis von Sauerstoff zu Ammoniak (O₂/NH₃) im Bereich von 0,7 bis 1,25 (Mol/Mol).

Bevorzugt kann das Eduktgasgemisch auf maximal 150°C, besonders bevorzugt maximal 120°C vorgewärmt werden.

Die Strömungsgeschwindigkeit mit der das Eduktgas zum Katalysator geleitet wird, kann in einem weiten Bereich liegen. Gemäß einer bevorzugten Abwandlung des erfindungsgemäßen Verfahrens, wird das Eduktgas mit einer Geschwindigkeit im Bereich von 0,5 bis 5 m/s, besonders bevorzugt 0,8 bis 2,5 m/s zum Katalysator geleitet. Die angegebene Strömungsgeschwindikeit bezieht sich auf den Querschnitt des Reaktorkessels und berücksichtigt die Betriebsbedingungen (Druck, Temperatur) des Eduktgasgemisches, das zum Katalysator geleitet wird. Da sich der Querschnitt des Reaktors verändern kann, beziehen sich diese Angaben auf den durchschnittlichen Querschnitt des Reaktors zwischen dem Mischelement und der gasdurchlässigen Zwischenschicht.

Nachfolgend soll die vorliegende Erfindung anhand von Beispielen erläutert werden, ohne dass hierdurch eine Beschränkung erfolgen soll.

### Beispiele

Die Ergebnisse der nachfolgend beschriebenen Beispiele wurden in einer Versuchsapparatur, bestehend aus einer Dosiereinheit mit thermischen Massedurchflussreglern für die eingesetzten Eduktgase (Methan, Ammoniak, Luft), einer elektrischen Heizung zur Vorwärmung der Eduktgase auf 100°C sowie einem Reaktorkessel mit einem Innendurchmesser von 100 mm gefunden. Im Reaktorkessel wurden verschiedene Einbauten getestet.

### Beispiel 1:

Die Gaszuführung erfolgt von oben in den Reaktorkessel. Die Zuführöffnung hat einen Durchmesser von 25 mm. Unterhalb des Zuführbereichs ist ein Mischelement bestehend aus einer abwechselnden Anordnung von Scheiben und Ringen, die im Abstand von 10 mm parallel zueinander installiert sind. Die zentrisch fixierten Scheiben besitzen einen Durchmesser von 93 mm. Der freie Spalt am Randbereich beträgt somit 3,5 mm. Die Ringe füllen den gesamten Innendurchmesser aus (100 mm) und besitzen eine kreisrunde Öffnung in der Mitte mit einem Durchmesser von 40 mm. In Strömungsrichtung sind die Elemente
Scheibe - Ring - Scheibe - Ring - Scheibe angeordnet.

Das Mischelement wird mit einem Randabweiser (Leitblech) in Form eines 10 mm breiten Rings abgeschlossen.
Ca. 10 mm unterhalb des Rings ist eine gasdurchlässige Schicht installiert. Dieser Einbau besteht aus zwei Lochblechen (Außendurchmesser 100 mm, Durchmesser Löcher: 5 mm) zwischen denen ein Metall-Tressengewebe mit einer nominalen Maschenweite von 80 µm und darüber eine ca. 6 mm dicke Lage Mineralwolle platziert ist.

Im Abstand von 30 mm unterhalb der gasdurchlässigen Schicht ist der Katalysator bestehend aus 6 Lagen eines Pt/Rh10 Katalysatornetzes (1024 Maschen/cm, 0,076 mm Drahtstärke) installiert. Die Katalysatornetze werden von einem metallischen Stützgitter mit 10 mm Maschenweite und 2 mm Drahtstärke getragen und sind im Randbereich in Nefalit-Dichtmasse (Si-Keramikfaser-Mischung) eingelassen. Das Stützgitter liegt auf einer keramischen Auflage mit Strömungskanälen mit 6 mm Durchmesser auf. Unterhalb der keramischen Auflage tritt das Reaktionsgas in einen Rohrbündelwärmeaustauscher ein, in dem das Reaktionsgas auf ca. 200 °C abgekühlt wird.

### Beispiel 2:

Wie Beispiel 1 jedoch liegt der Pt-Netzkatalysator ohne metallisches Stützgitter direkt auf der keramischen Auflage auf.

### Beispiel 3:

Wie Beispiel 1 jedoch mit einem Mischelement, in dem in Strömungsrichtung die die Elemente
Scheibe - Ring - Scheibe angeordnet sind.

### Beispiel 4:

Wie Beispiel 3 jedoch mit einem Mischelement bestehend aus 2 Lochblechen mit einem Durchmesser von 100 mm und mit Löchern von 5 mm Durchmesser. Die beiden Lochscheiben sind parallel zueinander im Abstand von 20 mm angeordnet.

### Vergleichsbeispiel 1:

Wie Beispiel 4 jedoch ohne Mischelement. Das zuströmende Gasgemisch trifft direkt auf die gasdurchlässige Schicht.

### Vergleichsbeispiel 2:

Wie Vergleichsbeispiel 1, jedoch ohne gasdurchlässige Schicht. Das zuströmende Gasgemisch trifft direkt auf die beschriebenen Katalysatornetze.

Nach dem Reaktorkessel wurde des Reaktionsgas in einem Rohrbündel auf ca. 200°C abgekühlt und einem nachgeschalteten HCN-Wäscher zur Neutralisation der gebildeten HCN mit NaOH-Lösung zugeführt.

Das Reaktionsgas wurde online in einem GC analysiert. Zur Bilanzierung der gebildeten HCN-Menge wurde zusätzlich die ausgetragene NaCN-Lösung gewogen und der CN⁻-Gehalt im Austrag des HCN-Wäschers durch argentometrische Titration bestimmt.

Alle Versuche wurden mit einem konstanten Eduktgasvolumenstrom von ca. 25 Nm³/h und gleichen Eduktgaszusammensetzungen durchgeführt, wobei der Luftvolumenstrom ca. 18,2 Nm³/h, der NH₃-Volumenstrom ca. 3,35 Nm³/h und der Methan-Volumenstrom ca. 3,27 Nm³/h betrug. Die Eduktgastemperatur betrug in allen Versuchen 100°C. Tabelle 1 zeigt die erhaltenen Ergebnisse.

**Tabelle 1**

| | HCN-Ausbeute [kg/h] | HCN-Ausbeute bez. auf NH3 [%] | HCN-Ausbeute bez. auf Methan [%] | HCN-Konz in Reaktionsgas [Vol%] |
|---|---|---|---|---|
| Beispiel 1 | 2,76 | 67,8 | 69,9 | 7,81 |
| Beispiel 2 | 2,67 | 65,8 | 67,6 | 7,63 |
| Beispiel 3 | 2,58 | 64,67 | 65,46 | 7,40 |
| Beispiel 4 | 2,61 | 64,25 | 65,42 | 7,15 |
| Vergleichsbeispiel 1 | 2,37 | 58,69 | 59,95 | 6,43 |
| Vergleichsbeispiel 2 | 2,11 | 52,41 | 53,86 | 5,77 |

Die erfindungsgemäßen Ausführungsformen des Reaktors (Beispiele 1 - 4) zeigen signifikant bessere Ergebnisse bezüglich der Reaktorleistung und der Ausbeute. Die höhere HCN-Konzentration im Reaktionsgas ermöglicht zudem eine energetisch vorteilhaftere Isolierung der HCN im Aufarbeitungsprozess.

## Patentansprüche

1. Reaktor (1) zur Herstellung von Cyanwasserstoff nach dem Andrussow-Verfahren, umfassend einen Reaktorkessel (2), mindestens eine Gaszuleitung (3), die in einen Gaszuleitungsbereich (4) mündet, eine Ableitung der Reaktionsprodukte (5) und einen Katalysator (6), **dadurch gekennzeichnet, dass** innerhalb des Reaktorkessels (2) zwischen dem Gaszuleitungsbereich (4) und dem Katalysator (6) mindestens ein Mischelement (7) sowie mindestens eine gasdurchlässige Zwischenschicht (8) vorgesehen sind, wobei das Mischelement (7) zwischen dem Gaszuleitungsbereich (4) und der gasdurchlässigen Zwischenschicht (8) angeordnet ist
und dass die gasdurchlässige Zwischenschicht (8) mindestens ein in Richtung des Katalysators (6) angeordnetes Metallnetz (9) und eine Lage aus Glaswolle oder Quarzwolle (10) umfasst, die in Richtung des Gaszuleitungsbereichs (4) angeordnet ist.

2. Reaktor gemäß Anspruch 1, **dadurch gekennzeichnet, dass** das Mischelement (7) Platten enthält, bevorzugt dichte Platten, die eine Fläche aufweisen, die mindestens 40% der Reaktorquerschnittsfläche entspricht.

3. Reaktor gemäß Anspruch 1 oder 2, **dadurch gekennzeichnet, dass** die Platten schichtförmig angeordnet sind, wobei das Mischelement (7) mindestens 3 Plattenschichten umfasst, wobei der Plattenabstand bevorzugt 1 cm bis 100 cm beträgt.

4. Reaktor gemäß mindestens einem der vorhergehenden Ansprüche, **dadurch gekennzeichnet, dass** der Katalysator (6) flächig im Reaktor ausgebildet ist, wobei die Fläche so angeordnet ist, dass die Fläche vom Gas in einem Winkel im Bereich von 70 bis 110° durchströmt wird, wobei der Katalysator (6) bevorzugt mindestens ein Netz umfasst, das Platin enthält.

5. Reaktor gemäß mindestens einem der Ansprüche 2 bis 4, **dadurch gekennzeichnet, dass** der flächig im Reaktor ausgebildete Katalysator (6) und die Platten, die im Mischelement (7) enthalten sind und/oder die gasdurchlässige Zwischenschicht (8) und der flächig im Reaktor ausgebildete Katalysator (6) einen Winkel bilden, der im Bereich von -10° bis +10° liegt.

6. Reaktor gemäß mindestens einem der vorhergehenden Ansprüche, **dadurch gekennzeichnet, dass** durch die gasdurchlässige Zwischenschicht (8) ein Druckabfall erzeugt wird, der im Bereich von 5 bis 100 mbar liegt, gemessen mittels U-Rohrmanometer bei einer Strömungsgeschwindigkeit des Eduktgasgemisches von 1,5 m/s und/oder dass die gasdurchlässige Zwischenschicht (8) mindestens ein in Richtung des Katalysators (6) angeordnetes Metallnetz (9) und eine Lage aus Glaswolle (10) umfasst, die in Richtung des Gaszuleitungsbereichs (4) angeordnet ist, wobei das in der Zwischenschicht angeordnete Metallnetz (9) bevorzugt eine nominale Maschenweite im Bereich von 1 µm bis 200 µm besonders bevorzugt im Bereich von 5 µm bis 100 µm aufweist.

7. Reaktor gemäß Anspruch 6 **dadurch gekennzeichnet, dass** das Metallnetz (9) und die Lage aus Glaswolle (10) von zwei Lochblechen (11) eingeschlossen sind.

8. Reaktor gemäß mindestens einem der vorhergehenden Ansprüche, **dadurch gekennzeichnet, dass** der Abstand zwischen der gasdurchlässigen Zwischenschicht (8) und dem flächig im Reaktor ausgebildeten Katalysator (6) mindestens 30 mm beträgt.

9. Reaktor gemäß mindestens einem der vorhergehenden Ansprüche, **dadurch gekennzeichnet, dass** der Reaktorkessel (2) in Strömungsrichtung des Gases gesehen ab der Zwischenschicht (8) eine Innenauskleidung (12) aus einem hitzebeständigen Material aufweist.

10. Reaktor gemäß mindestens einem der vorhergehenden Ansprüche, **dadurch gekennzeichnet, dass** unmittelbar auf dem Katalysator (6) eine Schicht aus einem keramischen Material (13) aufgebracht ist und/oder dass der Katalysator (6) auf einer Auflage (14) aufliegt, die aus Keramik hergestellt ist, wobei die Auflage (14) aus Keramik bevorzugt eine obere Keramikauflage (15) und eine untere Keramikauflage (16) aufweist.

11. Reaktor gemäß Anspruch 10 **dadurch gekennzeichnet, dass** zwischen dem Katalysator (6) und der Auflage (14) aus Keramik ein Metallnetz (17) vorgesehen ist.

12. Reaktor gemäß mindestens einem der Ansprüche 1 bis 11, **dadurch gekennzeichnet, dass** der Katalysator (6) auf einer Auflage (14) aufliegt, die mindestens ein metallisches Tragnetz (18) umfasst, das auf einem Traggitter (19) aus Metall aufgebracht ist, wobei das Tragnetz (18) bevorzugt eine Maschenweite im Bereich von 1 mm bis 50 mm aufweist.

13. Reaktor gemäß mindestens einem der vorhergehenden Ansprüche, **dadurch gekennzeichnet, dass** die Ableitung der Reaktionsprodukte (5) Rohrbündel (20) umfasst, die in Form von Wärmeaustauschern ausgestaltet sind, wobei die Rohrbündel (20) bevorzugt in der Nähe des Reaktorkessels mit keramischen Elementen (21) vor Hitzeeinwirkung geschützt sind.

14. Verfahren zur Herstellung von HCN nach dem Andrussow-Verfahren, **dadurch gekennzeichnet, dass** ein Reaktor gemäß den Ansprüchen 1 bis 13 eingesetzt wird.

15. Verfahren gemäß Anspruch 14, **dadurch gekennzeichnet, dass** die Temperatur des Gases im Bereich des Mischelements höchstens 150°C beträgt.

## Claims

1. Reactor (1) for preparing hydrogen cyanide by the Andrussow process, comprising a reactor vessel (2), at least one gas inlet (3) which opens into a gas inlet region (4), an outlet for the reaction products (5) and a catalyst (6), **characterized in that** at least one mixing element (7) and at least one gas-permeable intermediate layer (8) are provided within the reactor vessel (2) between the gas inlet region (4) and the catalyst (6), the mixing element (7) being arranged between the gas inlet region (4) and the gas-permeable intermediate layer (8), and **in that** the gas-permeable intermediate layer (8) comprises at least one metal mesh (9) arranged in the direction of the catalyst (6) and a sheet of glass wool or quartz wool (10) which is arranged in the direction of the gas inlet region (4).

2. Reactor according to Claim 1, **characterized in that** the mixing element (7) comprises plates, preferably impervious plates which have an area which corresponds to at least 40% of the cross-sectional reactor area.

3. Reactor according to Claim 1 or 2, **characterized in that** the plates are arranged in a layered manner, the mixing element (7) comprising at least 3 plate layers, the plate distance preferably being 1 cm to 100 cm.

4. Reactor according to at least one of the preceding claims, **characterized in that** the catalyst (6) is configured areally in the reactor, the area being arranged such that the area is flowed through by the gas at an angle in the range of 70 to 110°, the catalyst (6) preferably comprising at least one mesh which comprises platinum.

5. Reactor according to at least one of Claims 2 to 4, **characterized in that** the catalyst (6) configured areally in the reactor and the plates which are present in the mixing element (7) and/or the gas-permeable intermediate layer (8) and the catalyst (6) configured areally in the reactor form an angle which is in the range of -10° to +10°.

6. Reactor according to at least one of the preceding claims, **characterized in that** the gas-permeable intermediate layer (8) generates a pressure drop which is in the range of 5 to 100 mbar, measured by means of a U-tube manometer at a flow rate of the reactant gas mixture of 1.5 m/s, and/or **in that** the gas-permeable intermediate layer (8) comprises at least one metal mesh (9) arranged in the direction of the catalyst (6) and a layer of glass wool (10) which is arranged in the direction of the gas inlet region (4), the metal mesh (9) arranged in the intermediate layer preferably having a nominal mesh width in the range of 1 µm to 200 µm, particularly preferably in the range of 5 µm to 100 µm.

7. Reactor according to Claim 6, **characterized in that** the metal mesh (9) and the layer of glass wool (10) are enclosed by two perforated sheets (11).

8. Reactor according to at least one of the preceding claims, **characterized in that** the distance between the gas-permeable intermediate layer (8) and the catalyst (6) configured areally in the reactor is at least 30 mm.

9. Reactor according to at least one of the preceding claims, **characterized in that** the reactor vessel (2), viewed in flow direction of the gas from the intermediate layer (8) has an inner lining (12) of a heat-resistant material.

10. Reactor according to at least one of the preceding claims, **characterized in that** a layer of a ceramic material (13) has been applied directly to the catalyst (6) and/or **in that** the catalyst (6) rests on a support (14) which has been produced from ceramic, the support (14) composed of ceramic preferably having an upper ceramic support (15) and a lower ceramic support (16).

11. Reactor according to Claim 10, **characterized in that** a metal mesh (17) is provided between the catalyst (6) and the support (14) composed of ceramic.

12. Reactor according to at least one of Claims 1 to 11, **characterized in that** the catalyst (6) rests on a support (14) which comprises at least one metallic support mesh (18) which has been applied on a support grid (19) composed of metal, the support mesh (18) preferably having a mesh width in the range of 1 mm to 50 mm.

13. Reactor according to at least one of the preceding claims, **characterized in that** the outlet of the reaction products (5) comprises tube bundles (20) which are configured in the form of heat exchangers, the tube bundles (20) preferably being protected from the action of heat with ceramic elements (21) close to the reactor jacket.

14. Process for preparing HCN by the Andrussow process, **characterized in that** a reactor according to Claims 1 to 13 is used.

15. Process according to Claim 14, **characterized in that** the temperature of the gas in the region of the mixing element is at most 150°C.

## Revendications

1. Réacteur (1) pour la préparation d'acide cyanhydrique selon le procédé Andrussow, comprenant une cuve (2) de réacteur, au moins une conduite d'alimentation (3) en gaz qui débouche dans une zone d'alimentation (4) en gaz, une conduite d'évacuation des produits de réaction (5) et un catalyseur (6), **caractérisé en ce qu'**au moins un élément de mélange (7) ainsi qu'au moins une couche intermédiaire (8) perméable au gaz sont disposés dans la cuve (2) de réacteur entre la zone d'alimentation (4) en gaz et le catalyseur (6), l'élément de mélange (7) étant disposé entre la zone d'alimentation (4) en gaz et la couche intermédiaire (8) perméable au gaz et **en ce que** la couche intermédiaire (8) perméable au gaz comprend au moins une toile métallique (9) disposée vers le catalyseur (6) et une couche de laine de verre ou de laine de quartz (10), qui est disposée vers la zone d'alimentation (4) en gaz.

2. Réacteur selon la revendication 1, **caractérisé en ce que** l'élément de mélange (7) contient des plaques, de préférence des plaques fermées, qui présentent une surface qui correspond à au moins 40% de la surface transversale du réacteur.

3. Réacteur selon la revendication 1 ou 2, **caractérisé en ce que** les plaques sont disposées en forme de couches, l'élément de mélange (7) comprenant au moins 3 couches de plaques, la distance entre les plaques étant de préférence de 1 cm à 100 cm.

4. Réacteur selon au moins l'une quelconque des revendications précédentes, **caractérisé en ce que** le catalyseur (6) est conçu de manière plane dans le réacteur, la surface étant disposée de manière telle que la surface est traversée par un flux de gaz sous un angle dans la plage de 70 à 110°, le catalyseur (6) comprenant de préférence une toile qui contient du platine.

5. Réacteur selon au moins l'une quelconque des revendications 2 à 4, **caractérisé en ce que** le catalyseur (6) conçu de manière plane dans le réacteur et les plaques, qui sont contenues dans l'élément de mélange (7) et/ou l'élément intermédiaire (8) perméable au gaz et le catalyseur (6) conçu de manière plane dans le réacteur forment un angle qui est situé dans la plage de -10° à +10°.

6. Réacteur selon au moins l'une quelconque des revendications précédentes, **caractérisé en ce qu'**une chute de pression, qui est située dans la plage de 5 à 100 mbars, mesurée au moyen d'un manomètre à tube en U à une vitesse d'écoulement du mélange gazeux de départ de 1,5 m/s, est générée par la couche intermédiaire (8) perméable au gaz, et/ou **en ce que** la couche intermédiaire (8) perméable au gaz comprend au moins une toile métallique (9) disposée dans le sens du catalyseur (6) et une couche de laine de verre (10), qui est disposée vers la zone d'alimentation (4) en gaz, la toile métallique (9) disposée dans la couche intermédiaire présentant de préférence une largeur nominale de maille dans la plage de 1 µm à 200 µm, de manière particulièrement préférée dans la plage de 5 µm à 100 µm.

7. Réacteur selon la revendication 6, **caractérisé en ce que** la toile métallique (9) et la couche de laine de verre (10) sont entourées par deux tôles perforées (11).

8. Réacteur selon au moins l'une quelconque des revendications précédentes, **caractérisé en ce que** la distance entre la couche intermédiaire (8) perméable au gaz et le catalyseur (6) conçu de manière plane dans le réacteur est d'au moins 30 mm.

9. Réacteur selon au moins l'une quelconque des revendications précédentes, **caractérisé en ce que** la cuve (2) de réacteur présente, vue dans le sens d'écoulement du gaz, un revêtement interne (12) en matériau résistant à la chaleur à partir de la couche intermédiaire (8).

10. Réacteur selon au moins l'une quelconque des revendications précédentes, **caractérisé en ce qu'**une couche en matériau céramique (13) est appliquée directement sur le catalyseur (6) et/ou **en ce que** le catalyseur (6) est disposé sur un support (14) qui est réalisé en céramique, le support (14) en céramique présentant de préférence un support supérieur (15) en céramique et un support inférieur (16) en céramique.

11. Réacteur selon la revendication 10, **caractérisé en ce qu'**une toile métallique (17) est disposée entre le catalyseur (6) et le support (14) en céramique.

12. Réacteur selon au moins l'une quelconque des revendications 1 à 11, **caractérisé en ce que** le catalyseur (6) est situé sur un support (14) qui comprend au moins une toile support (18) métallique, qui est disposée sur une grille support (19) en métal, la toile support (18) présentant de préférence une largeur de maille dans la plage de 1 mm à 50 mm.

13. Réacteur selon au moins l'une quelconque des revendications précédentes, **caractérisé en ce que** la conduite d'évacuation des produits de réaction (5) comprend des faisceaux tubulaires (20) qui sont conçus sous forme d'échangeurs thermiques, les faisceaux tubulaires (20) étant de préférence protégés par des éléments céramiques (21) contre l'effet de la chaleur à proximité de la cuve du réacteur.

14. Procédé pour la préparation de HCN selon le procédé Andrussow, **caractérisé en ce qu'**on utilise un réacteur selon l'une quelconque des revendications 1 à 13.

15. Procédé selon la revendication 14, **caractérisé en ce que** la température du gaz au niveau de l'élément de mélange est d'au plus 150°C.
